# EUROPEAN PATENT APPLICATION

(11) **EP 4 764 670 A1**
(43) Date of publication of application: **24.06.2026**
(21) Application number: 24307164.4
(22) Date of filing: 18.12.2024
(51) Int. Cl.: G02C 7/02, G02C 11/06

(54) **METHOD FOR DETERMINING AN OPTICAL PARAMETER OF A PROGRESSIVE ADDITION LENS TO BE WORN BY A WEARER EQUIPPED WITH A HEARING AID DEVICE**

(71) Applicant: Essilor International, 94220 Charenton-Le-Pont (FR)
(72) Inventor: GUILLOUX, Cyril, 94000 CRETEIL (FR); DE SAINT AUBERT, Jean-Baptiste, 75019 PARIS (FR); PARMENTIER, Valérie, 92500 RUEIL MALMAISON (FR)
(74) Representative: Jacobacci & Partners France

(57) **Abstract**

The invention relates to a method, computer-implemented, for determining an optical parameter of a progressive addition lens (3) to be worn by a wearer, the progressive addition lens having an optical parameter relating to vision correction, the wearer being equipped with a hearing aid device (2) adapted to acquire, amplify and transmit sounds to the wearer, the hearing aid device having a sensitivity which is maximum along a main direction (D1),
the method comprising:
- determining a behavior parameter representative of a head response of the wearer, when he is equipped with the hearing aid device, to an auditive stimulation spatially offset from the main direction,
- determining, based on the behavior parameter, the optical parameter of the progressive addition lens.

## Description

### TECHNICAL FIELD OF THE INVENTION

The invention relates to the field of ophthalmology.

The invention relates more particularly to a method for determining an optical parameter of a progressive addition lens to be worn by a wearer equipped with a hearing aid device.

The invention also relates to a wearable system determined according to this method.

### BACKGROUND INFORMATION AND PRIOR ART

Hearing aid devices are commonly used to improve audition of people with hearing disorders. Most recent hearing aid devices are directive, or have a directive conversational mode, which means that the sound capture apparatus of the device has a high directivity which helps focus the attention of the wearer in a particular direction. In other words, this directivity allows extracting sound coming from a particular main direction, for instance in front of the wearer to efficiently listen to a person he is speaking with, and to filter out background noise coming from the sides.

However, such a hearing aid device changes the natural head behavior of the wearer. At the same time, head behavior is a key parameter to design progressive addition lenses. Using such a directive hearing aid device may thus render the personalized optical design of a progressive addition lens not adapted anymore to the wearer.

By way of an example, the wearer of the hearing aid device may move his head with more amplitude, faster, or more frequently, in order to align the source of a sound with the main direction of the hearing aid device. The wearer may thus experience more dynamic distortions, which results in an uncomfortable swim effect.

Therefore, there is a need for personalizing a progressive addition lens to a wearer who is also using a directive hearing aid device.

### SUMMARY OF THE INVENTION

Therefore one object of the invention is to provide a method, computer-implemented, for determining an optical parameter of a progressive addition lens to be worn by a wearer, the progressive addition lens having an optical parameter relating to vision correction, the wearer being equipped with a hearing aid device adapted to acquire, amplify and transmit sounds to the wearer, the hearing aid device having a sensitivity which is maximum along a main direction,
the method comprising:
- determining a behavior parameter representative of a head response of the wearer, when he is equipped with the hearing aid device, to an auditive stimulation spatially offset from the main direction,
- determining, based on the behavior parameter, the optical parameter of the progressive addition lens.

Thanks to the behavior parameter of the method according to the invention, a change in the behavior of the wearer due to the hearing aid device can be taken into account when designing the progressive addition lens.

Following the example above, the optical design of the progressive addition lens can be determined such that the progressive addition lens produces low dynamic distortions when the behavior parameter indicates that the hearing aid device increases the head movements of the wearer. Put differently, it is thus possible to anticipate the fact that the wearer would experience more dynamic distortions when equipped with the hearing aid device by adapting the design of the progressive ophthalmic lens, for instance by increasing the softness of the progressive addition lens.

Other advantageous and non-limiting features of the method according to the invention are:
- the optical parameter is determined such that the higher the head response is, the lower dynamic distortions generated by the progressive addition lens are;
- lowering dynamic distortions comprises increasing the softness of the progressive addition lens and/or reducing the curvature of the front face of the progressive addition lens towards the lower periphery of the progressive addition lens;
- the optical parameter of the progressive addition lens is one of the following: softness, power gradient, curvature of the front face, stereoscopy, parallax, magnification homogeneity, addition of the front face;
- the behavior parameter relates to a directivity of the hearing aid device;
- the optical parameter is determined such that the higher the directivity of the hearing aid device is, the lower the dynamic distortions generated by the progressive addition lens are;
- the behavior parameter is defined as an angle, with respect to the main direction, delimiting a region of space wherein the sensitivity of the hearing aid device is higher than a predetermined threshold;
- the behavior parameter is determined based on an auditive task during which the wearer is equipped with the hearing aid device and responds to the auditive stimulation;
- during the auditive task, the auditive stimulation is combined with a visual stimulation positioned at an emission point of the auditive stimulation;
- the behavior parameter which is determined based on the auditive task is one of the following: an head-eye coefficient, a speed or acceleration of head movement, a speed or acceleration of eye movement, an amplitude of head movement, an amplitude of eye movement, a posture, a gaze direction;
- the optical parameter is determined such that the higher the head-eye coefficient, the lower the dynamic distortions generated by the progressive addition lens are;
- the optical parameter of the progressive addition lens is determined based on an additional behavior parameter representative of a head response of the wearer to an auditive stimulation spatially offset from the main direction when he is not equipped with the hearing aid device or when he is equipped with an omnidirectional hearing aid device;
- the optical parameter of the progressive addition lens is also determined based on a sensitivity of the wearer to dynamic distortions generated by the progressive addition lens.

The invention also relates to a wearable system comprising:
- a hearing aid device adapted to acquire, amplify and transmit sounds to the wearer, the hearing aid device having a sensitivity which is maximum along a main direction; and
- a progressive addition lens having an optical parameter related to dynamic distortions generated by the progressive addition lens which is determined by means of a method as described above.

Advantageously, the wearable system comprises a frame in which the hearing aid device and the progressive addition lens are mounted.

### DETAILED DESCRIPTION OF EXAMPLE(S)

The following description, enriched with joint drawings that should be taken as non-limitative examples, will help understand the invention and figure out how it can be realized.

On the appended drawings:
- figure 1 is a schematic representation of a wearable system according to the invention comprising a directional hearing aid device and progressive addition lenses, together with a sensitivity diagram of the hearing aid device,
- figure 2 is a schematic representation of the sensitivity diagram of figure 1 on which a region of higher sensitivity is illustrated,
- figure 3 is a schematic representation of an auditive task performed by a wearer of the directional hearing aid device of figure 1, and
- figure 4 is a graphical representation of the head-eye response of the wearer (in degrees "°" over time "t") during the auditive task of figure 3.

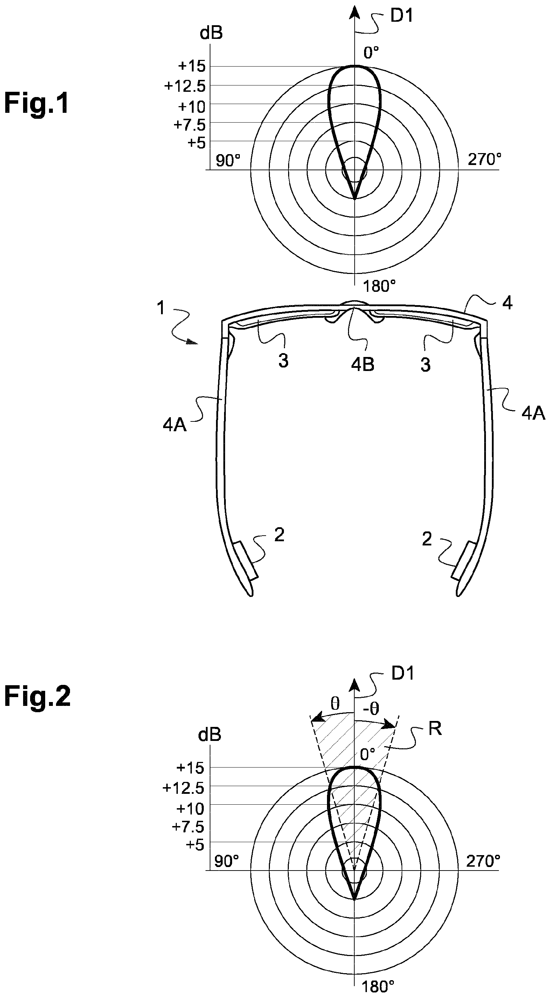

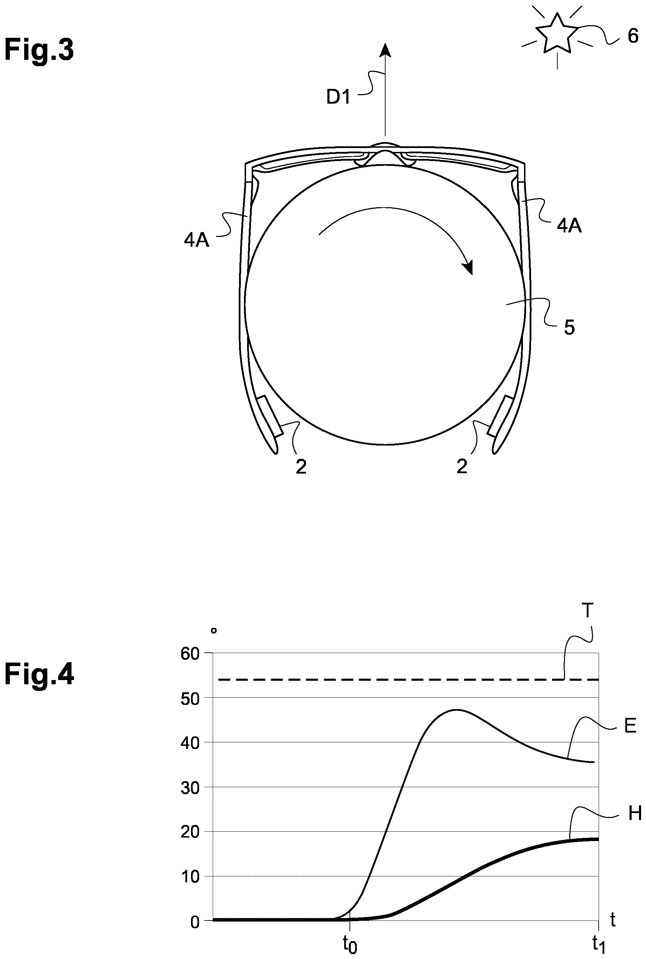

A wearable system 1 according to the invention is represented in figure 1. The wearable system 1 comprises a hearing aid device 2 and at least one progressive addition lens 3. The wearable system 1 is "wearable" in the sense that it is adapted to integrally fit on a head 5 of an individual, referred to as a wearer hereinafter (see figure 3 wherein the frame 4 is positioned on the head 5 of the wearer).

In the example represented in figure 1, the wearable system 1 is an eyewear comprising a frame 4 in which are mounted two progressive addition lenses 3, and the hearing aid device 2. In figures 1 and 3, the hearing aid device 2 is represented as comprising two parts protruding from the free end of the two branches 4A of the frame 4. Of course, the hearing aid device 2 may be partly or totally integrated within the frame 4. As a variant, the hearing aid device and the progressive addition lenses may be separated, i.e. disjointed, the hearing aid device being for instance adapted to fit on a wearer's ear.

The progressive addition lenses 3 are progressive ophthalmic lenses. Progressive ophthalmic lenses enable the wearer to benefit from optical power compensation adapted to different viewing distances, without having to change glasses. They can also correct other visual defects, such as astigmatism. A progressive ophthalmic lens typically comprises a first vision zone for far vision with a first average power value (at a far vision reference point of the lens), a second vision zone for near vision with a second average power value (at a near vision reference point of the lens) and, between these two zones, a third vision zone for intermediate vision, whose power varies progressively, and which is called the progression corridor. The difference between the first and second average power values is commonly referred to as the power addition of the lens (or more simply as the addition of the lens).

The progressive addition lenses 3 are adapted to be placed in front of the eyes of the wearer for improving and/or correcting his vision (one lens in front of each eye). The wearer typically suffers from presbyopia and thus needs a correction comprising an optical power that varies over the surface of the progressive addition lenses 3. The progressive addition lenses 3 thus have one or more optical parameters relating to vision correction and/or vision improvement. These optical parameters include any characteristic of the progressive addition lenses 3 that are related to their effect on the optical path of light rays (i.e. the shape of those light rays) transmitting through the progressive addition lenses 3. These optical parameters are for instance selected in the group comprising: softness, power gradient, curvature of the front face, stereoscopy, parallax, magnification homogeneity, addition of the front face. These optical parameters are for instance defined in documents WO2024056666A1 and EP3599499A1.

The hearing aid device 2 is adapted to acquire, amplify and transmit sounds to the wearer. The hearing aid device 2 thus helps the wearer better perceive sounds around him. The wearer typically suffers from a hearing disorder and thus needs the hearing aid device 2 to hear comfortably. Here, the hearing aid device 2 comprises one or more microphones.

The hearing aid device 2 is here directive in the sense that it is more performant in particular directions. Put differently, the hearing aid device 2 thus helps the wearer better perceive sounds coming from one or more specific directions. Here, the hearing aid device 2 has a sensitivity which is maximum along one specific direction called the main direction D1. The sensitivity of the hearing aid device 2 is for instance defined as the ratio of the electrical voltage it generates to the acoustic pressure it receives. The main direction D1 is spatially dependent on the position of the hearing aid device 2 and thus on the position of the head 5 of the wearer. In the example represented in figure 1, the main direction D1 corresponds to a forward direction at zero degree which is here substantially parallel to the gaze direction of the wearer when he is looking straight ahead in a natural posture. Here, the main direction D1 is for instance parallel to an intersection of the horizontal plan and of a vertical symmetrical plan of the frame (when the wearer is in a natural posture). As represented in figure 1, the main direction D1 is substantially parallel to the two branches 4A of the frame 4.

The directivity of the hearing aid device 2 is illustrated in figures 1 and 2 by means of a directivity diagram, also called directivity pattern, showing the sound amplification (in decibel "dB") provided by the hearing aid device 2 as a function of the direction. The reference point for plotting the sound amplification is for instance the geometrical center of hearing aid device 2 or the center of the nose bridge (referenced 4B in figure 1). Here, the hearing aid device 2 is highly directive. Indeed, as figure 2 shows it, the amplification is reduced by more than 10 dB when the direction deviates by more than 30 degrees from the main direction D1. The directivity of the hearing aid device 2 may for instance be obtained by means of a super-directional microphone or a hypercardioid microphone. The main direction D1 may then be arranged by adapting the position of the microphone on the frame 4 of the wearable system 1. Here, it is preferentially obtained by using a microphone array and a beamforming process (i.e. spatial filtering). The main direction D1 may thus be numerically arranged by adapting the processing of the signal coming from the microphones.

In the following, the main direction D1 is spatially fixed with respect to the wearable system 1 (and thus with respect to the head of the wearer), which means that the main direction D1 spatially moves only due to movements of the wearable system 1 (and thus due to movements of the head of the wearer).

A method for optically designing the progressive addition lenses 3 of the wearable system 1 is described below. The determination of one optical parameter of one of the progressive addition lenses 3, which will be referred to as "the optical parameter" of "the progressive addition lens 3", is described hereafter. Preferentially, the progressive addition lens 3 is designed to be manufactured.

The method more specifically comprises the following steps:
a) determining a behavior parameter representative of a head response of the wearer, when he is equipped with the hearing aid device 2, to an auditive stimulation spatially offset from the main direction D1,
b) determining, based on the behavior parameter, the optical parameter of the progressive addition lens 3.

Step b) of the method is implemented by means of a data-processing device, such as a computer comprising at least one processor and at least one non-transitory memory. The memory, which forms a computer-readable storage medium, comprises instructions which, when executed by the processor, allows the data-processing device to implement step b). In addition, as described in the embodiments below, step a) may also be partly or totally implemented by means of the data-processing device.

In step a), determining the behavior parameter comprises acquiring and/or calculating and/or measuring the behavior parameter. The behavior parameter being representative of the head response of the wearer means that the behavior parameter allows evaluating how the wearer responds, or would respond, to the auditive stimulation when equipped with the hearing aid device 2.

The behavior parameter is thus representative of a movement of the head 5 of the wearer that the wearer performs, or is likely to perform, due to the position of the auditive stimulation and the directivity of the hearing aid device 2. Indeed, the auditive stimulation being spatially offset from the main direction D1, the wearer tends to move his head 5 in order to improve his auditive perception of the auditive stimulation. Put differently, he is prone to move his head 5 to align the auditive stimulation with the main direction D1 so that the auditive stimulation occurs in the most sensitive direction of the hearing aid device 2.

The auditive stimulation is thus a sound emitted at an emission point which is not already aligned with the main direction D1 of the hearing aid device 2.

Here, the wordings "head behavior" and "head response" refer to the head as a whole but may also refer to the eyes, which are then encompassed by the term "head". The behavior parameter is for instance selected in the group comprising: an head-eye coefficient, a speed or acceleration of head movement, a speed or acceleration of eye movement, an amplitude of head movement, an amplitude of eye movement, a posture such as a head tilt or a head angle, a gaze direction. As a variant, the wordings "head behavior" and "head response" refer only to the head.

In step b), the optical parameter of the progressive addition lens 3 is determined based on the behavior parameter. The optical design of the progressive addition lens 3 thus depends on the behavior of the wearer. The behavior parameter thus allows anticipating the new head behavior of the wearer when he is equipped with the hearing aid device 2 (with respect to when he is not equipped with it) so that the progressive addition lens 3 accurately fits the wearer correction needs and/or improves his vision comfort.

By way of an example, the optical parameter is determined such that the higher the head response is, the lower dynamic distortions generated by the progressive addition lens 3 are. A higher head response may be defined as a higher probability or susceptibility that the wearer moves his head when equipped with the hearing aid device 2 as compared to when he is not equipped with it. The greater the head movement is, the higher the head response is. For instance, a high head response may be due to the fact that the hearing aid device 2 is highly directive (the more directive, the higher the head response). Lowering dynamic distortions thus makes the wearer comfortable with the progressive addition lens 3 even though he tends to move his head 5 with more amplitude, faster, or more frequently due to the directive hearing aid device 2.

Lowering dynamic distortions may for instance be obtained by increasing the softness of the progressive addition lens 3.

The softness of an ophthalmic lens is a value representative of a compromise between the wearer's field of vision through the progressive addition lens 3 and the effects of peripheral distortions linked to the optical aberrations of the progressive addition lens 3, which includes dynamic distortions. A high softness indicates lower peripheral distortions of the image seen through the lens but a reduced field of vision, in comparison to a low softness which indicates a wider field of vision but greater distortions.

Lowering dynamic distortions may also be obtained by reducing the curvature of the front face of the progressive addition lens 3 towards the lower periphery of the progressive addition lens 3, that is to say towards the bottom of the progressive addition lens 3. The front face is the optical surface of the progressive addition lens 3 that is, when used, opposite the eye of the wearer. Put differently, the local power is reduced at the lower periphery of the progressive addition lens 3 by making the front face flatter. The variation of power, between the center of the progressive addition lens 3 and the lower periphery of the progressive addition lens 3, is thus reduced. As a counterpart, magnification is also reduced at the lower periphery of the progressive addition lens 3.

Here, the lower periphery of the progressive addition lens 3 includes the near vision zone and may also include, in addition, zones adjacent to the near vision zone located at the left and at the right of the latter. In other words, the lower periphery of the progressive addition lens 3 is defined by complementarity to an upper part of the progressive addition lens 3 which here includes the far vision zone.

Lowering dynamic distortions may be obtained implementing only one of the two possibilities described above (increasing the softness and reducing the curvature of the front face towards the bottom) or by implementing those two possibilities simultaneously.

In a first embodiment of the invention, described in reference to figure 2, the behavior parameter is linked to the directivity of the hearing aid device 2. The behavior parameter allows assessing, based on the acoustic properties of the hearing aid device 2, how the wearer would respond to the above-mentioned auditive stimulation.

In this first embodiment, the behavior parameter being representative of the head response is to be understood as being predictive of said head response in the sense that it anticipates said head response. In other words, the head response is estimated. As an illustrative example, the more directive the hearing aid device is, the more likely to move his head the wearer is since aligning the main direction D1 with the source of the sound greatly improves the sound perception of the wearer. Advantageously, the behavior parameter is easily computable and can be used for several potential wearers.

In this first embodiment, step a) is implemented by the data processing device. Step a) comprises acquiring data on the hearing aid device 2, for instance from an electronic datasheet, and processing those data to determine the behavior parameter.

In a general manner, in step b), the optical parameter may be determined such that the higher the directivity of the hearing aid device 2 is, the lower the dynamic distortions generated by the progressive addition lens 3 are.

More specifically, the behavior parameter may be defined as an angle, with respect to the main direction D1, delimiting a region of space wherein the sensitivity of the hearing aid device 2 is higher than a predetermined threshold. The predetermined threshold may be absolute, such as a predetermined amplification value in decibel, or relative as illustrated in figure 2. In figure 2, the behavior parameter is defined as the angle (referenced θ) for which the amplification is equal to 80% of the maximum amplification and is approximately equal to 15 degrees. The region of space of higher sensitivity (referenced R) delimited by this angle has a two-dimensional triangular shape in figure 2 but delimits a cone in three dimensions. As a variant, the behavior parameter may be defined as the angle for which the amplification falls below the threshold for the first time, in particular when the amplification is not symmetrical around the main direction.

The optical parameter may then be the softness of the progressive addition lens 3 and may be determined, in step b), such that the lower said angle is, the higher the softness is.

More particularly, the optical parameter may be a gradient ratio of the maximum gradient power in the periphery of the progressive addition lens 3 over the maximum gradient power along the meridian of the progressive addition lens 3 (i.e. along the progression corridor). This gradient ratio is conventional in the field of progressive lenses and is for instance described in document EP2959337B1 (see more specifically paragraphs [0035] to [0045], considering a referential linked to the eye of the wearer). The higher the gradient ratio is, the lower the softness of the progressive addition lens 3 is.

As an example, the gradient ratio GR may then be determined according to the following criterion, wherein *θ* is the angle (in degrees) defining the behavior parameter and *abs()* the absolute value function: GR <= 1 if abs(θ) <= 30. As another example, the gradient ratio GR ratio can be determined according to the following criterion: GR <= 0.1 * abs(θ) / 30 + 0.9 .

These criteria clearly illustrate that when the hearing aid device 2 is highly directive (i.e. when *θ* is small) the gradient ratio must be lower, which means that the softness must be high. This anticipates that the wearer will strongly or frequently move his head due to the high directivity of the hearing aid device 2. Conversely, when the hearing aid device 2 is less directive (i.e. when *θ* is large) the gradient ratio can be increased, which means that the softness can be decreased as the wearer should not move his head 5 more strongly or frequently due to the lower directivity of the hearing aid device 2. Of course, many other criteria might be defined and stored on the memory of the data-processing device, for instance a linear increasing function giving the gradient ratio as a function of said angle.

In a second embodiment of the invention, the behavior parameter is determined based on an auditive task performed by the wearer equipped with the hearing aid device 2. During the auditive task, the wearer is asked to physically respond to the above-mentioned auditive stimulation. The behavior parameter thus allows assessing how the wearer actually responds to the above-mentioned auditive stimulation.

In this second embodiment, the behavior parameter is deduced from measurements performed on the wearer. The behavior parameter being representative of the head response is thus to be understood as being descriptive of said head response in the sense that it qualifies or quantifies said head response. In other words, the head response is measured. Advantageously, in this second embodiment, the behavior parameter is personalized to the wearer which means that the behavior parameter specifically depicts the head behavior of the wearer equipped with the hearing aid device 2.

In this second embodiment, step a) is implemented by the data processing device and by a measurement system comprising a target 6 (figure 3) and head movement measuring apparatus (not represented).

This second embodiment is described in reference to figure 3 wherein the target 6 is both an auditive target and a visual target, which means that the target emits the auditive stimulation and emits a visual stimulation. The target 6 for instance comprises a light source, such as a LED, and a sound source, such as a speaker. In other words, the auditive stimulation is combined with a visual stimulation positioned at the emission point of the auditive stimulation (or very close to it). Hereinafter, the combination of the auditive stimulation and the visual stimulation is referred to as the audio-visual stimulation.

The behavior parameter is for instance the head-eye coefficient. The head-eye coefficient is here defined as a ratio between the angular extent of the head movement over the angular eccentricity of the target 6 emitting the audio-visual stimulation. Figure 3 is an illustrative example wherein the target 6 is positioned at an angular position of approximately 50 degrees on the side. The angular position of the target 6 is defined with respect to a central axis of the head 5 at rest, that is to say before the emission of the audio-visual stimulation. In figure 3, the central axis of the head 5 corresponds to the main direction D1 of the hearing aid device 2.

During the auditive task, the wearer is asked to focus on a semantic content provided by the sound source while looking at the light source. When the target 6 starts emitting the audio-visual stimulation the wearer performs a head movement (illustrated by a curved arrow in figure 3) towards the target 6.

Here, during the auditive task, the wearer is equipped with the frame 4 and the hearing aid device 2. The frame 4 may be provided with no lenses, single-focal lenses, trial lenses or lenses corresponding to a previous correction of the wearer.

In order to measure the head movement of the wearer, clips (not represented in figure 3) may be placed on the frame 4. Preferentially, those clips are adapted to be tracked by an infrared image capture apparatus to acquire the head movement. As a variant, motion sensors could be placed on the head of the wearer.

Figure 4 illustrates the head response of the wearer. Figure 4 shows, with respect to a reference direction (here the central axis of the head 5 at rest), the direction of the head 5 (referenced H) and the direction of the target 6 (referenced T) as a function of time. The direction T of the target 6 corresponds to the angular eccentricity and is thus constant over time. For comprehension purposes, the direction of one of the eyes of the wearer 4 (referenced E in figure 4), here the one before which the progressive addition lens 3 is intended to be placed, is also represented, even though, in practice, the eye response may not be measured. At t₀ (corresponding to a reaction time) after the beginning of the audio-visual stimulation, the wearer first moves his eyes. The wearer then moves his head 5 (alternatively, the head might move before the eyes). Gaze directions tend to align on the target 6 and, at the same time, the head 5 of the wearer reaches a stable direction at t₁. The head-eye coefficient is computed as the ratio between this stable direction of the head over the direction of the target 6.

As a variant, two targets or more may be used and alternatively activated so the wearer moves his head from left to right. An averaged head-eye coefficient can be computed for greater accuracy.

As a variant, the target may only be an auditive target, the wearer then only responds to the auditive stimulation. He is still prompted to move his head due to the directivity of the hearing aid device 2. The head-eye coefficient may still be computed as the ratio of the stable direction of the head over the direction of the target, i.e. its angular eccentricity.

In a general manner, in step b), the optical parameter may be determined such that the higher the head-eye coefficient, the lower the dynamic distortions generated by the progressive addition lens 3 are (which for instance means a high softness of the progressive addition lens 3).

In more detail, the optical parameter may be the gradient ratio defined in the first embodiment. Relationships between the head-eye coefficient and the gradient ratio may be stored in the memory of the data-processing device. These relationships may for instance comprise a linear decreasing function giving the gradient ratio as a function of the head-eye coefficient.

By way of an illustrative example, these relationships may comprise a correlation table giving different values of the gradient ratio for different values of the head-eye coefficient. The correlation table may for instance indicates that:
- the gradient ratio is equal to 1 when the head-eye coefficient is equal to 0,7;
- the gradient ratio is equal to 0,9 when the head-eye coefficient is equal to 0,8;
- the gradient ratio is equal to 0,8 when the head-eye coefficient is equal to 0,9;

Of course, many other relationships might be defined and stored on the memory of the data-processing device.

Advantageously, in both embodiments, an additional behavior parameter can be determined. The additional behavior parameter is here representative of a head response of the wearer to the auditive stimulation spatially offset from the main direction but when he is not equipped with the hearing aid device 2 or when he is equipped with an omnidirectional hearing aid device (that is to say a hearing aid device whose sensitivity is substantially equal in all directions).

The optical parameter of the progressive addition lens 3 is then also determined based on an additional behavior parameter. In a remarkable manner, this helps optimize the optical design of the progressive addition lens 3 to take into account that the wearer may not be equipped with the hearing aid device 2, or with an omnidirectional hearing aid device, when using the progressive addition lens 3.

Weights can be given to the behavior parameter and the additional behavior parameter depending on preferences of the wearer such as an expected used of the progressive addition lens 3, for instance indicating that it will be used more with or without the hearing aid device 2. If the wearer indicates that he will equally use the progressive addition lens 3 with and without the hearing aid device 2, the weight of the behavior parameter and the additional behavior parameter might be equal.

By way of an example, the additional behavior parameter may be an additional head-eye coefficient determined according to the second embodiment. Considering that the head-eye coefficient is 0,9 and the additional head-eye coefficient is 0,7, an averaged head-eye coefficient of 0,8 can be used to determine the gradient ratio, which is for instance set to 0,9 according to the exemplary correlation table described above (instead of 0,8 without taking into account the additional head-eye coefficient).

Advantageously, in both embodiments, the optical parameter of the progressive addition lens is also determined based on a sensitivity of the wearer to dynamic distortions. As an example, when the wearer has a high sensitivity to dynamic distortions, the progressive addition lens 3 is designed such that its softness is higher than what it would be when considering only the behavior parameter.

In a general manner, the optical parameter of the progressive addition lens 3 can be optimized to take into account the natural behavior of the wearer (without a hearing aid device), the behavior of the wearer when equipped with an omnidirectional hearing aid device and the behavior of the wearer when equipped with the hearing aid device 2.

Advantageously, the method according to the invention may be completed by a step of manufacturing the progressive ophthalmic lens 3, or selecting it from a set of already manufactured lenses, according to the optical parameter, i.e. such that the progressive ophthalmic lens 3 complies with the optical parameter or is as close as possible from the optical parameter.

The invention is not limited to the embodiments described and illustrated, and any variant in accordance with the appended claims could be provided. For instance, the hearing aid device may comprise a conversational mode which is directive and a "360" mode which is omnidirectional, the method described above being thus implemented for the conversational mode which makes the hearing aid device directive.

## Claims

1. Method, computer-implemented, for determining an optical parameter of a progressive addition lens (3) to be worn by a wearer, the progressive addition lens (3) having an optical parameter relating to vision correction, the wearer being equipped with a hearing aid device (2) adapted to acquire, amplify and transmit sounds to the wearer, the hearing aid device (2) having a sensitivity which is maximum along a main direction (D1),
the method comprising:
- determining a behavior parameter representative of a head response of the wearer, when he is equipped with the hearing aid device (2), to an auditive stimulation spatially offset from the main direction (D1),
- determining, based on the behavior parameter, the optical parameter of the progressive addition lens (3).

2. Method according to claim 1, wherein the optical parameter is determined such that the higher the head response is, the lower dynamic distortions generated by the progressive addition lens (3) are.

3. Method according to claim 2, wherein lowering dynamic distortions comprises increasing the softness of the progressive addition lens (3) and/or reducing the curvature of the front face of the progressive addition lens (3) towards the lower periphery of the progressive addition lens (3).

4. Method according to any one of claims 1 to 3, wherein the optical parameter of the progressive addition lens (3) is one of the following: softness, power gradient, curvature of the front face, stereoscopy, parallax, magnification homogeneity, addition of the front face.

5. Method according to any one of claims 1 to 4, wherein the behavior parameter relates to a directivity of the hearing aid device (2).

6. Method according to claims 2 and 5, wherein the optical parameter is determined such that the higher the directivity of the hearing aid device (2) is, the lower the dynamic distortions generated by the progressive addition lens (3) are.

7. Method according to claim 5 or 6, wherein the behavior parameter is defined as an angle (θ), with respect to the main direction (D1), delimiting a region of space (R) wherein the sensitivity of the hearing aid device (2) is higher than a predetermined threshold.

8. Method according to any one of claims 1 to 4, wherein the behavior parameter is determined based on an auditive task during which the wearer is equipped with the hearing aid device (2) and responds to the auditive stimulation.

9. Method according to claim 8, wherein during the auditive task, the auditive stimulation is combined with a visual stimulation positioned at an emission point of the auditive stimulation.

10. Method according to claim 8 or 9, wherein the behavior parameter which is determined based on the auditive task is one of the following: an head-eye coefficient, a speed or acceleration of head movement, a speed or acceleration of eye movement, an amplitude of head movement, an amplitude of eye movement, a posture, a gaze direction.

11. Method according to claims 2 and 10, wherein the optical parameter is determined such that the higher the head-eye coefficient, the lower the dynamic distortions generated by the progressive addition lens (3) are.

12. Method according to any one of claims 1 to 11, wherein the optical parameter of the progressive addition lens (3) is determined based on an additional behavior parameter representative of a head response of the wearer to an auditive stimulation spatially offset from the main direction (D1) when he is not equipped with the hearing aid device (2) or when he is equipped with an omnidirectional hearing aid device (2).

13. Method according to any one of claims 1 to 12, wherein the optical parameter of the progressive addition lens (3) is also determined based on a sensitivity of the wearer to dynamic distortions generated by the progressive addition lens (3).

14. Wearable system comprising:
- a hearing aid device (2) adapted to acquire, amplify and transmit sounds to the wearer, the hearing aid device (2) having a sensitivity which is maximum along a main direction (D1); and
- a progressive addition lens (3) having an optical parameter related to dynamic distortions generated by the progressive addition lens (3) which is determined by means of a method according to any one of claims 1 to 13.

15. Wearable system according to claim 14, comprising a frame (4) in which the hearing aid device (2) and the progressive addition lens (3) are mounted.
